# EUROPEAN PATENT APPLICATION

(11) **EP 2 512 015 A1**
(43) Date of publication of application: **17.10.2012**
(21) Application number: 11195402.0
(22) Date of filing: 22.12.2011
(51) Int. Cl.: H02K 41/02, E05F 15/18

(54) **Linear actuator particularly for sliding doors**

(30) Priority: 15.04.2011 IT PD20110123
(71) Applicant: Topp S.p.A. A Socio Unico, 36066 Sandrigo, VI (IT)
(72) Inventor: Cavalcante, Toni, 36031 Dueville VI (IT)
(74) Representative: Modiano, Micaela Nadia

(57) **Abstract**

A linear actuator (10) particularly for sliding doors and for sliding door or window closure elements in general, comprising a box-like body (11), to be fixed with corresponding means of fixing between the two jambs (S 1, S2) of a door (P) or of a window or door frame, in order to move a leaf (A) by translational motion, fixed drive means being accommodated within the box-like body (11) which are adapted to move corresponding transmission means which are associated with the leaf (A).

The means of fixing the box-like body (11) are adjustable and self adapting.

## Description

The present invention relates to a linear actuator, particularly for sliding doors.

Nowadays, in the field of automation of the home and of habitable spaces generally, the use is becoming more and more widespread of actuators for opening and closing inner doors as well.

The automation of "pocket" doors, i.e. slide-away doors, is however currently still not common, since such pocket doors are normally installed to be moved manually, and a subsequent mounting of actuation means in order to automate the translational motion of the leaf is relatively complex and inconvenient.

Such subsequent mounting requires in fact the removal of the jamb of the door for the mounting of parts of the actuation mechanism to be fixed to the leaf, as well as the addition of a box-like body to contain the actuation means, the latter being supported inside the box-like body by a metallic cross-member that constitutes the supporting structure for the actuator itself, to be arranged at the upper edge of the leaf after specific cutting to measure.

The box-like body and the structural cross-member, in addition to representing a cost in their own right, exhibit the drawback of needing to be cut to measure according to the space of the door to which they are to be applied.

In order to overcome these drawbacks, the Applicant has devised a linear actuator particularly for sliding doors and for sliding door or window closure elements in general, comprising a box-like body, to be fixed between the two jambs of a door or of a window or door frame, the leaf of which is to be moved by translational motion, fixed driven means being accommodated within the box-like body which are adapted to move corresponding transmission means which are associated with the leaf, the peculiarity of such actuator being constituted by the fact that the box-like body is telescopic in structure in order to be adapted in length to the width of the space of the door with which it is intended to be used.

Such a structure is the subject of a parallel patent application in the name of this same Applicant.

Such linear actuator, being a self-contained device to be fixed to the exterior both of the wall and of the door, must be capable of being positioned between the jambs so that its functional configuration is always optimal with respect to the leaf to be moved.

The aim of the present invention is to provide a linear actuator, particularly for sliding doors, the functional configuration of which is capable of adapting autonomously to the plays and dimensional gaps that typically exist between the leaves and the rails of pocket doors.

Within this aim, an object of the invention is to provide a linear actuator that is also capable of being easily adapted to any width of the opening of the door with which it is intended to be used.

Another object of the invention is to provide a linear actuator that is compact and easily applied, even for a person with no special prior training.

Another object of the invention is to provide a linear actuator particularly for sliding doors, that can be made using known systems and technologies.

This aim and these objects, as well as others that will become better apparent hereinafter, are achieved by a linear actuator particularly for sliding doors and for sliding doors and windows generally, comprising a box-like body, to be fixed with corresponding means of fixing between the two jambs of a door or of a window or door frame in order to move a corresponding leaf by translational motion, fixed driven means being accommodated within said box-like body which are adapted to move corresponding transmission means which are associated with said leaf, said linear actuator being characterized in that said means of fixing the box-like body are adjustable and self-adapting.

Further characteristics and advantages of the invention will become better apparent from the description of a preferred, but not exclusive, embodiment of the linear actuator according to the invention, which is illustrated by way of non-limiting example in the accompanying drawings wherein:
Figure 1 is a perspective view of an actuator according to the invention, applied to a sliding door;
Figure 2 is an exploded perspective view of a box-like body of the actuator according to the invention;
Figure 3 is a view from above of a first detail of the fixing means;
Figure 4 is a view of an element of the fixing means;
Figure 5 is a sectional view of the detail in Figure 3;
Figure 6 is a view from above of a second detail of the fixing means;
Figure 7 is a sectional view from above of Figure 6;
Figure 8 is a perspective view of the second detail of the fixing means;
Figure 8a is a longitudinal sectional view of the portion of the actuator in Figure 8;
Figures 9 and 10 are views of a variation of application of an actuator according to the invention.

With reference to the figures, a linear actuator, particularly for sliding doors and for sliding door or window closure elements in general, is generally designated with the reference numeral 10.

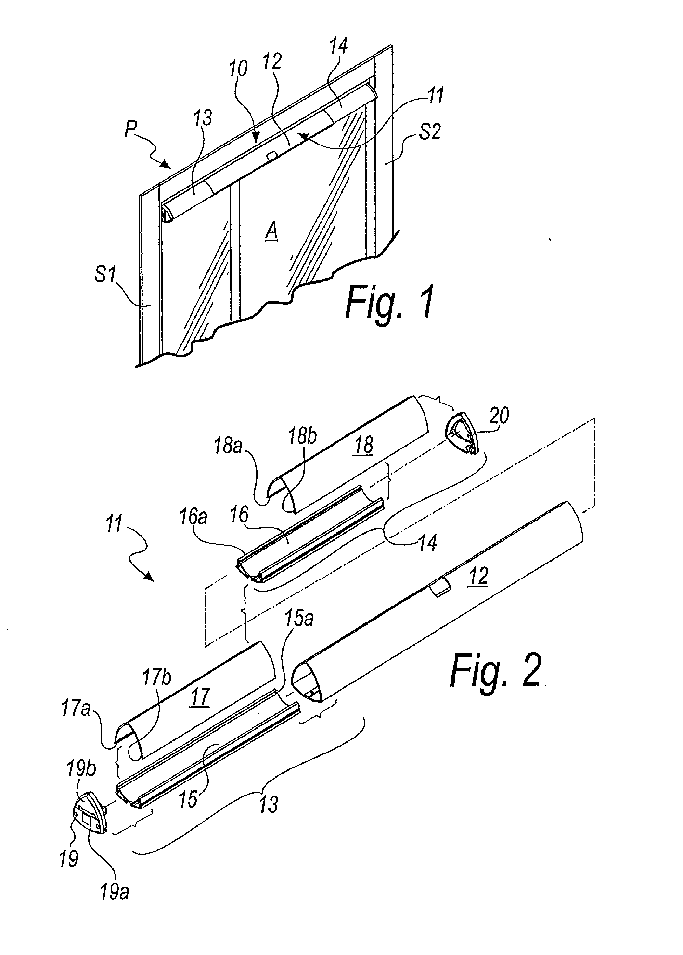

The actuator 10 comprises a box-like body 11, to be fixed with corresponding means of fixing, fully described hereinbelow, between the two jambs S1 and S2 of a door P, or of a window or door frame generally, at, as in the example in Figure 1, the upper rim of a leaf A to be moved by translational motion.

The box-like body 11 is telescopic in structure in order to be adapted in length to the width of the space of the door with which it is intended to be used.

The peculiarity of the invention lies in the fact that the means of fixing the box-like body better described hereinbelow, are adjustable and self-adapting.

Figure 2 shows an embodiment of the invention that is intended to be described by way of non-limiting example of the invention, in which the box-like body 11 comprises a central tubular part 12 and two lateral parts 13 and 14 respectively, also tubular, that can be telescopically slid out from the central part 12.

From the exploded perspective view in Figure 2 it can be seen how the two lateral parts 13 and 14 are each constituted by three pieces: a base, 15 and 16 respectively, a cover 17 and 18, which is removable, and a side plug 19 and 20.

The removable cover 17 and 18 is reversibly coupled to the corresponding base 15 and 16 by way of two opposing longitudinal anchoring appendages 17a and 17b and 18a and 18b, which are adapted to be inserted into corresponding grooves, for example 15a and 16a, defined on the respective bases 15 and 16.

The removability of the covers 17 and 18 enables the easy exploration of what is contained in the first and second parts 13 and 14 with consequent ease of intervention for maintenance, repair or the like.

Each one of the lateral parts 13 and 14 is reversibly locked to the central part 12, for example by way of threaded elements, not shown for the sake of simplicity, screwed to the central part 12 and arranged to press against the outer surface of the portions of the respective lateral parts 13 and 14 that are inserted in the central part.

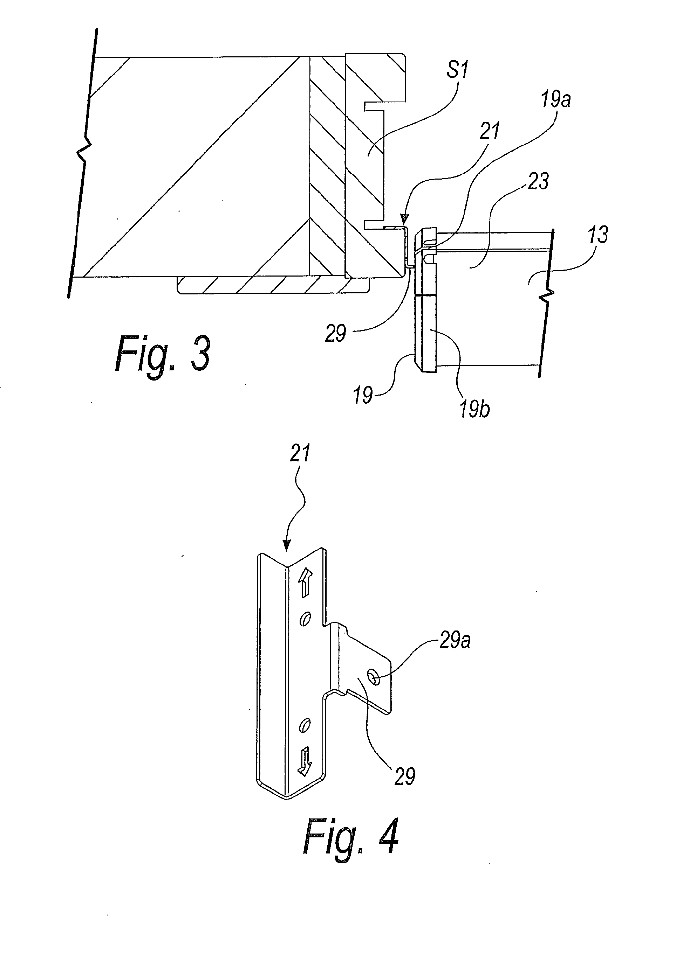

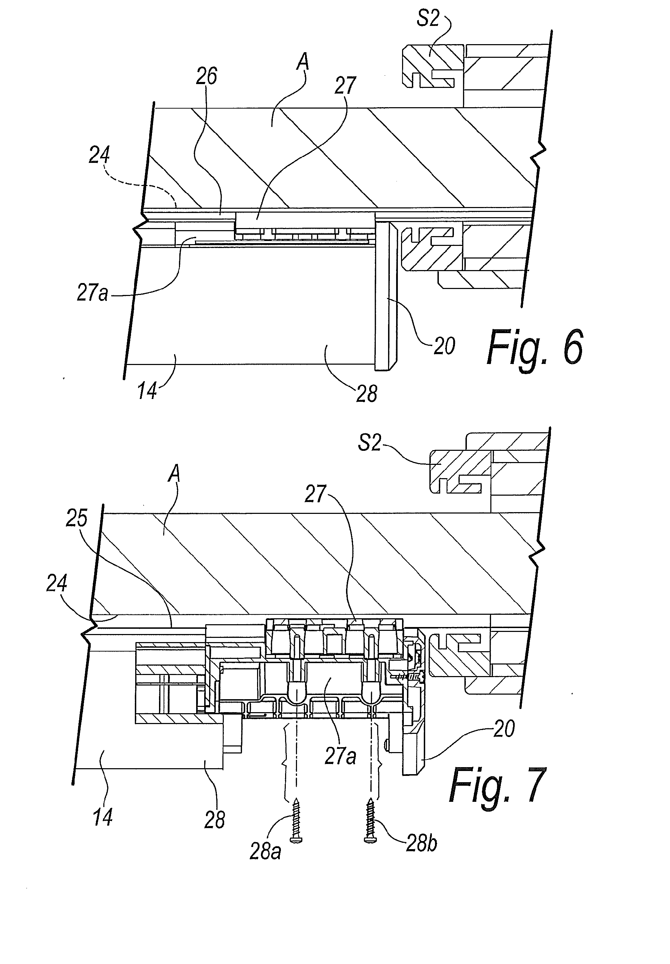

Figures 3 to 8 show the means of fixing, which advantageously are adjustable and self-adapting.

Such means of fixing are constituted at one end by:
- a bracket 21, to be fixed to one jamb S1,
- means 22 for the adjustment of the fixing distance between a first end 23 of the box-like body 11 and the surface 24 of the leaf A of the door, which are better described hereinbelow;
- means of pivoting 25 the first end 23 of the box-like body 11 to the bracket 21; while at the opposite end such adjustable and self-adapting means of fixing are constituted by:
- a guide rail 26, fixed to the leaf A,
- a slide 27, coupled to slide with respect to the rail 26 and integral with the opposite, second end 28 of the box-like body 11, such slide being for example fixed with threaded elements, such as screws 28a and 28b, to a corresponding end block 27a, within the second end 28 of the box-like body 11.

The bracket 21 is provided with a tab 29 which is contoured to protrude from the jamb S1 to which the bracket 21 is fixed, and to protrude in the direction of the opposite jamb S2.

The tab 29 is provided with a through hole 29a, which is adapted to cooperate with the definition of the means of pivoting of the first end 23 of the box-like body 11 to the bracket 21.

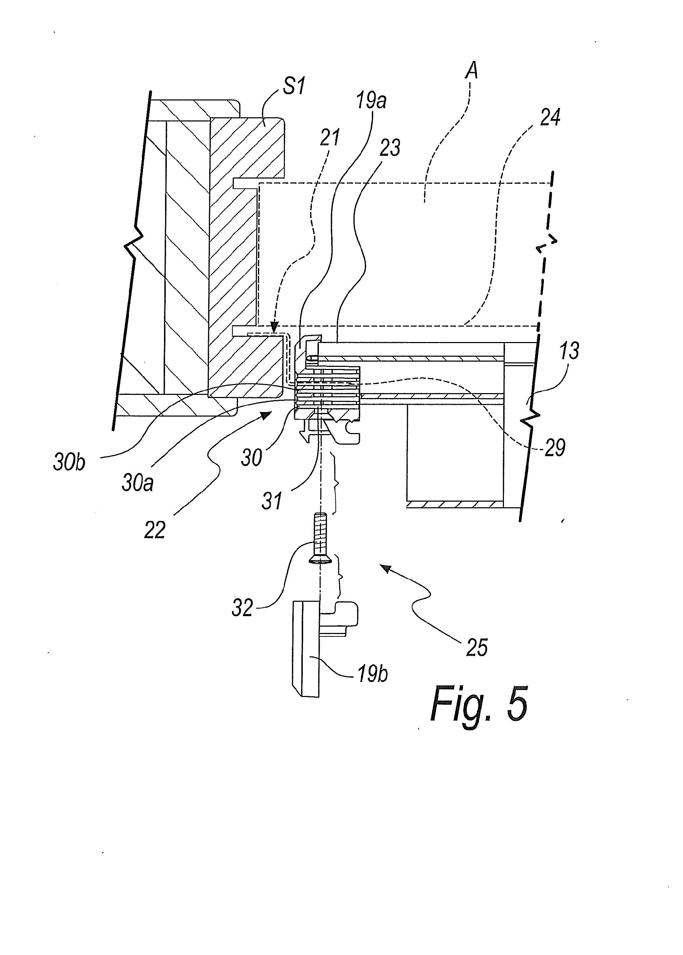

The means 22 for the adjustment of the fixing distance between the first end 23 of the box-like body 11 and the surface 24 of the leaf A of the door P comprise a block that corresponds to a first part 19a of the plug 19, arranged in the first end 23 of the box-like body 11, the first part 19a of the plug 19 containing a plurality of parallel seats arranged side by side 30, 30a, 30b and following for the perforated tab 29, clearly visible in Figure 5a.

The choice of seat between the various seats 30 and following in which to insert the perforated tab 29 determines the distance between the box-like body 11 and the facing underlying surface 24 of the leaf A.

The choice is at the discretion of the installer and is made so as to provide a configuration of substantial parallelism between the box-like body 11 and the rail 26 on the leaf A.

The means of pivoting 25 are constituted by a through hole 31 defined so as to pass through the plurality of seats 30 and following on the first part 19a of the plug 19, for joining, with a screw 32, the perforated tab 29 to the first part 19a so that the box-like body 11 can perform angular movements about the axis of the screw 32 and of the holes 29a of the tab and 31 of the first part 19a of the plug 19.

When screwing is completed the second part 19b of the plug 19 covers up the screw 32 and completes the plug 19.

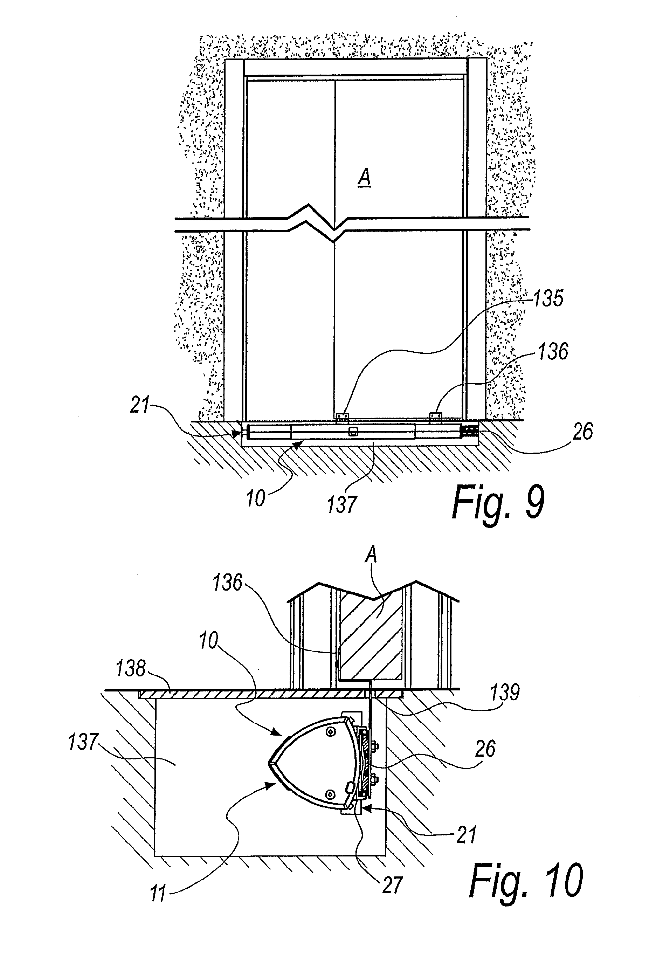

Figures 9 and 10 show a variation of application of the linear actuator 10 according to the invention. In such variation the rail 26 is carried, overhanging, by corresponding brackets 135 and 136 which protrude below the lower edge of the leaf A.

The linear actuator 10 is recessed in a compartment 137 defined below the leaf A and hidden by a closing plate 138 provided with a slit 139 for the sliding of the brackets 135 and 136.

Similarly to what is described above, the box-like body 11 is coupled at one end with a bracket 21 with a perforated hingeing tab screwed to the plug 19, and at the opposite end by way of a slide 27 coupled to the rail 26.

The installation of a linear actuator 10 according to the invention is thus very simple and intuitive, it being necessary and sufficient to:
- adjust the length of the box-like body 11 by acting on the lateral parts 13 and 14 and on the respective threaded elements;
- mount the bracket 21 onto a first jamb S1,
- mount the rail 26 onto the leaf A;
- pivot the first part 19a of the plug 19 to the perforated tab 29 of the bracket 21;
- fix the second end 28 of the box-like body 11 to the rail 26 by way of the slide 27 and corresponding threaded elements 28a and 28b.

By way of non-limiting example of the invention, the linear actuator 10 is of the type with permanent magnets, comprising a moving part, i.e. the rail 26, to be coupled integrally to a first body, i.e. the leaf A, which is adapted to be moved with respect to a second fixed body, i.e. the box-like body 11, and a fixed part, i.e. the drive means, to be coupled integrally to the box-like body 11.

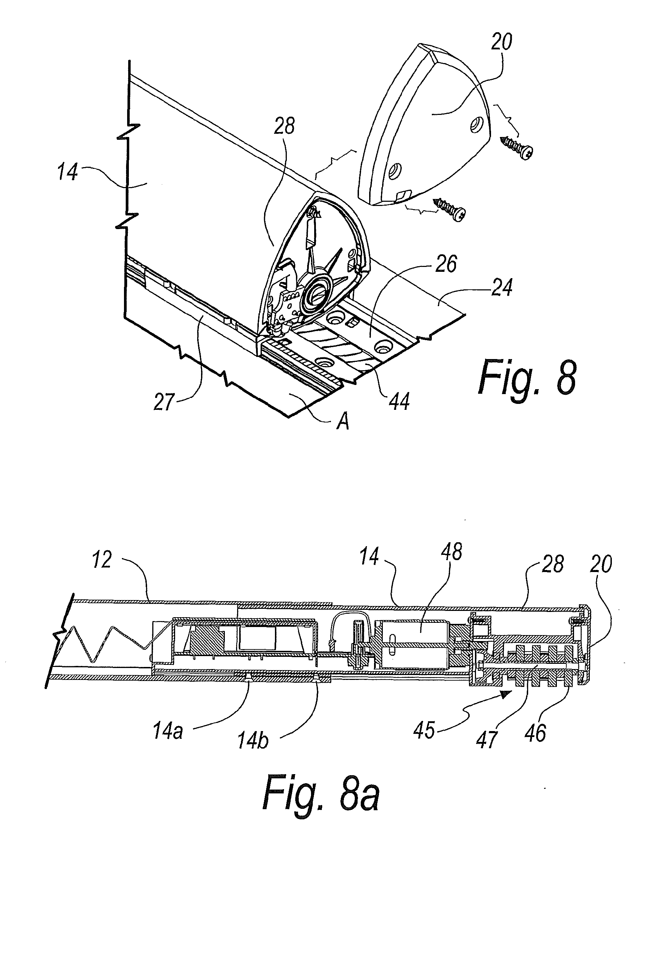

The rail 26 is provided, as in Figure 8, with a first series of first permanent magnets 44 aligned in a row extending in the direction of translational motion, while the drive means comprise, facing the row of first permanent magnets 44, a rotor element 45, shown in Figure 8a, comprising a second series of second permanent magnets 46, supported by a shaft 47 associated with an electric motor 48, the second magnets 46 being arranged side by side in the direction of the axis of the shaft, with polarities out of phase by a predetermined angle, as disclosed and claimed in WO 2009/062834 in the name of this same applicant.

In practice it has been found that the invention fully achieves the intended aim and objects.

In particular, with the invention a linear actuator has been devised which, thanks to the adjustable and self-adapting fixing means, lends itself well to supporting a linear actuator for example with permanent magnets, for which the constancy of the magnetic gap between rail and rotor is essential. Such constancy is in fact made possible by the means 22 described above for the adjustment of the fixing distance between one end 23 of the box-like body 11 and the surface 24 of the leaf A, which make it possible for the installer to install the box-like body 11 substantially parallel to the rail 26, as well as by the means of pivoting 25 of the end 23 of the box-like body 11 to the bracket 21, which enable the box-like body to vary its inclination about the axis of the screw 32, so following the angular movements of the rail and thus of the leaf. Such constancy is also made possible by the slide 27 which is free to slide with respect to the rail 26.

What is more, with the invention a linear actuator has been devised which thanks to the lateral parts that can be telescopically slid out from the central part is capable of being easily adapted to any width of the opening of the door with which it is intended to be used.

Moreover, with the invention a linear actuator has been provided that is compact and easy to apply, even for a person with no special prior training, thanks to the above mentioned ease of installation.

Moreover, with the invention a linear actuator has been provided that is easy to assemble.

What is more, with the invention a linear actuator has been devised which is particularly adapted to receive drive means of the type with permanent magnets.

Moreover, with the invention a linear actuator has been devised which can be applied to door leaves and to window shutters, both in an upper position, and in a lower position, either recessed in the floor for a door, or in the wall for a window.

Last but not least, with the invention a linear actuator particularly for sliding doors has been devised which can be made using known systems and technologies.

The invention, thus conceived, is susceptible of numerous modifications and variations, all of which are within the scope of the appended claims. Moreover, all the details may be substituted by other, technically equivalent elements.

In practice the materials employed, as well as the contingent dimensions and shapes, may be any according to requirements and to the state of the art.

The disclosures in Italian Patent Application No. PD2011A000123 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A linear actuator (10) particularly for sliding doors and for sliding door or window closure elements in general, comprising a box-like body (11), to be fixed with corresponding means of fixing between the two jambs (S 1, S2) of a door (P) or of a window or door frame, in order to move a leaf (A) by translational motion, fixed drive means being accommodated within said box-like body (11) which are adapted to move corresponding transmission means which are associated with said leaf (A), said linear actuator being **characterized in that** said means of fixing the box-like body (11) are adjustable and self-adapting.

2. The actuator according to claim 1, **characterized in that** said adjustable and self-adapting means of fixing are constituted at one end by:
- a bracket (21), to be fixed to one jamb (S1),
- means (22) for the adjustment of the fixing distance between one end (23) of said box-like body (11) and the surface (24) of the leaf (A) of the door (P),
- means of pivoting (25) said end (23) of said box-like body (11) to said bracket (21), and at the opposite end being comprised of:
- a guide rail (26), fixed to said leaf (A),
- a slide (27), coupled to slide with respect to said rail (26) and integral with the opposite, second end (28) of the box-like body (11).

3. The actuator according to claim 2, **characterized in that** said bracket (21) is provided with a tab (29) which is contoured to protrude from the jamb to which said bracket is fixed, in the direction of the opposite jamb, said tab (29) being provided with a through hole (29a), which is adapted to cooperate with the definition of said means of pivoting (25) of the end (23) of the box-like body (11) to said bracket (21).

4. The actuator according to claim 3, **characterized in that** said means (22) for the adjustment of the fixing distance between one end (23) of said box-like body (11) and the surface (24) of the leaf (A) of the door (P) comprise a block arranged in said end (23) of the box-like body (11), containing a plurality of parallel seats arranged side by side (30, 30a, 30b) for said perforated tab (29), the choice of the seat in which to insert said perforated tab determining the distance between said box-like body and the facing underlying surface of the leaf of the door.

5. The actuator according to claim 4, **characterized in that** said means of pivoting (25) are constituted by a through hole (31) defined so as to pass through said plurality of seats (30, 30a, 30b) on a first part (19a) of a plug (19), for joining, with a screw (32), said perforated tab (26) to said first part (19a) so that the box-like body (11) can perform angular movements about the axis of said screw (32).

6. The actuator according to claim 2, **characterized in that** said rail (26) is carried, overhanging, by at least one bracket (135) protruding below a lower edge of a leaf (A), said linear actuator (10) being recessed in a compartment (137) defined below the leaf (A) and hidden by a closing plate (138) provided with a slit (139) for the sliding of said at least one bracket (135).

7. The linear actuator according to claim 1, **characterized in that** said box-like body (11) is telescopic in structure in order to be adapted in length to the width of the space of the door (P), or other window or door frame, with which it is intended to be used.

8. The actuator according to claim 1, **characterized in that** said box-like body (11) comprises a central tubular part (12) and at least one lateral part (13) that can be telescopically slid out from said central part (12).

9. The actuator according to claim 1, **characterized in that** it comprises two (13, 14) of said at least one lateral part (13).

10. The actuator according to claim 9, **characterized in that** said lateral parts (13, 14) each comprise a base (15, 16) and a cover (17, 18), which is removable, for the inspection within thereof.
